# EUROPEAN PATENT SPECIFICATION

(11) **EP 2 541 815 B1**
(45) Date of publication and mention of the grant of the patent: **18.12.2013**
(21) Application number: 11171771.6
(22) Date of filing: 28.06.2011
(51) Int. Cl.: H04J 3/06

(54) **Clock synchronization network**
Taktsynchronisationsnetzwerk
Réseau de synchronisation d'horloge

(43) Date of publication of application: 02.01.2013
(73) Proprietor: Alcatel Lucent, 75007 Paris (FR)
(72) Inventor: Bui, Dinh Thai, 91620 Nozay (FR); Le Pallec, Michel, 91620 Nozay (FR)
(74) Representative: Sciaux, Edmond

(56) References cited:
- ANONYMOUS ED - ANONYMOUS: "IEEE Standard for a Precision Clock Synchronization Protocol for Networked Measurement and Control Systems; IEEE Std 1588-2008 (Revision of IEEE Std 1588-2002)", 24 July 2008 (2008-07-24), IEEE STANDARD; [IEEE STANDARD], IEEE, PISCATAWAY, NJ, USA, PAGE(S) C1 - 269, XP017601899, ISBN: 978-0-7381-5400-8 * 9. PTP for ordinary and boundary clocks Anexes D to I *
- Sven Nylund and Øyvind Holmeide: "IEEE 1588 Ethernet switch transparency", , 13 October 2004 (2004-10-13), pages 1-4, XP002663682, Retrieved from the Internet: URL:http://www.tekniska.pl/WebEditCMS/WebE ditAll/DownloadWWW.php?IdDP=1204481820&IdF ile=1213694496 [retrieved on 2011-11-16]
- PALLEC LE MICHEL ET AL: "Time and Frequency Distribution Over Packet Switched Networks", BELL LABS TECHNICAL JOURNAL, WILEY, CA, US, vol. 14, no. 2, 1 July 2009 (2009-07-01), pages 131-153, XP001546641, ISSN: 1089-7089, DOI: 10.1002/BLTJ.20377

## Description

### Field of the invention

The invention relates to the technical field of clock synchronization within packet-switched networks.

### Background

For various applications with demanding synchronization constraints, for example the synchronization of base stations of a mobile network, methods for the distribution of a reference time and/or a reference frequency on the packet-switching networks are being developed. For example, a Network Time Protocol (NTP) work group of the IETF is developing an upgrade to the NTP protocol initially specified in RFC 1305. The Precision Time Protocol (PTP) of the IEEE has been revised with this in mind. The ITU-T has defined a physical layer technology for the distribution of a reference frequency on an Ethernet network, called Synchronous Ethernet and described in the specifications G.8261, G.8262 and G.8264. 5.

The IEEE 1588V2 protocol or Precision Time Protocol release 2 (PTPV2) is being studied for supporting the distribution of time and frequency in the context of stringent applications such as mobile networks. Accuracy requirements in wireless networks are about 50 ppb for frequency and about one microsecond for time. In the context of Packet-Switched Networks (PSNs) and Time distribution, the performance of the IEEE 1588V2 protocol is mainly limited by the packet jitter and the communication path delay asymmetry, both often referred to as "network noise". The former is related to Packet Delay Variations (PDVs). The latter is the result of the difference between the communication delay of one PTPV2 message in one direction (e.g. from Master to Slave) as compared to the delay of a related PTPV2 message with the same sequence number in the opposite direction (e.g. from Slave to Master).

PTPV2 performance is very dependent on the PSN background traffic level, which is unpredictable. In order to remove/control these dependencies, Transparent Clock (TC) and Boundary Clocks-(BC) hardware support have been introduced in the PTPV2 standard.

Functionally, a BC does not forward synchronization messages such as PTP Event messages. Instead, it locally recovers the time reference, i.e. timescale of the Grand Master clock and then redistributes this reference down the clock hierarchy. Typically, a BC receives, from its peer master clock, a number of synchronization messages and uses those messages to synchronize its own local clock. In order to distribute the recovered time reference, the BC then produces new synchronization messages, which are transmitted to its slave(s).

One advantage of BCs is that they are involved in what is known as the Best Master Clock Algorithm (BMCA) in order to determine the best candidate master clock, which is elected as the Grand Master (GM) clock and is positioned at the top of the hierarchical clock architecture. This allows for greater flexibility and for automatic reconfiguration of the clock hierarchy.

A TC, on the other hand, simply receives a synchronization message from its master, and forwards it on to its slave. Before forwarding the PTP message to its slave however, the TC modifies a correction field of the PTP message to reflect the time it took for the synchronization message, encapsulated within a packet, to transit the TC. There are several advantages to using TCs. For example, TCs are relatively simple and efficient when compared to BCs (e.g. generally lower noise). On the other hand, TCs do provide some disadvantages as well. One important example of this is that the use of TCs can lead to the infringement of protocol specifications and/or protocol layer separation principles. This is because a TC modifies the header of a synchronization message within packet payload, and this, despite the fact that it is not recognized as the destination node of the packet. This is known as "layer violation".

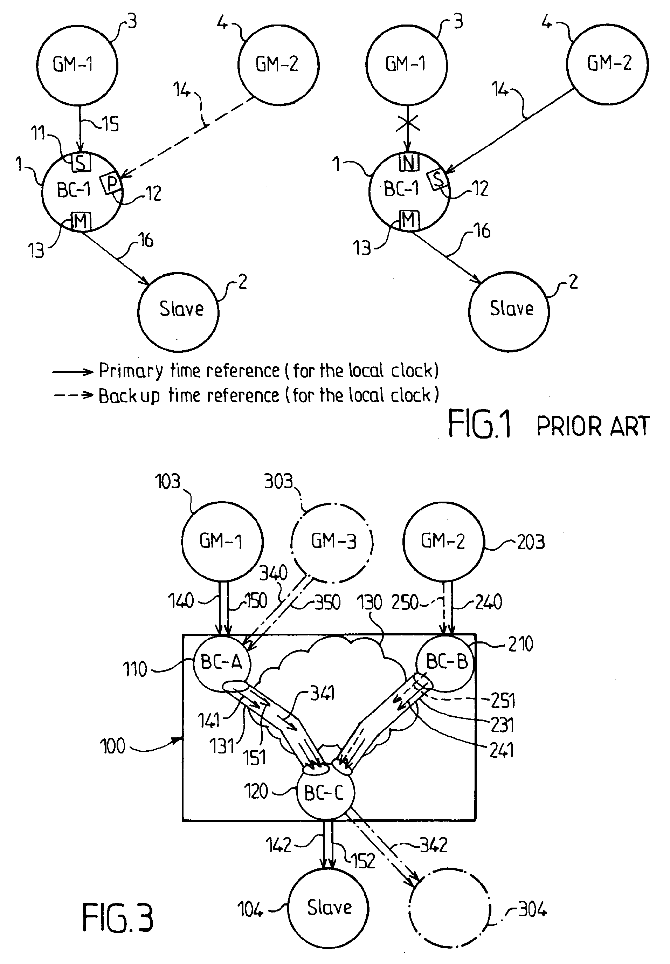

Figure 1 illustrates the operations of a Boundary Clock 1 arranged between a slave clock 2 and two candidate Master clocks 3 and 4. Although referred to as a "clock", it is understood that a circle in Figure 1 represents a network element comprising a PTP protocol engine adapted to process and generate PTP messages as well as communications means adapted to exchange packet traffic in accordance with a communication protocol stack, e.g. an IP router.

The boundary clock 1 possesses three ports 11, 12 and 13 which can be configured in either one of a number of states: master, slave, passive, faulty, etc. Port configuration is accomplished by the BMCA, which operates as follows. Each one of clocks 2 to 4 connected to boundary clock 1 sends a PTP Announce message comprising a so-called data set, which includes specification parameters of the corresponding clock. For example, the data set include a Clock class parameter indicating the quality of the output synchronization signal. The BMCA compares all data sets to determine a hierarchy of the clocks in terms of signal quality and configures the ports accordingly. In the example shown on the left-hand figure, boundary clock 1 determines that clock 3 is the best clock and configures port 11 in the Slave state, port 13 in the Master state and port 12 in the Passive state. Accordingly, the boundary clock 1 uses the synchronization flow 15 from master clock 3 to synchronize its own local clock and then generates a secondary synchronization flow 16 towards the slave clock 2. The synchronization flow 14 transmitted by clock4 is not used in that state. Boundary clock 1 has its own data set as well, which also depends on the parent data set, i.e. the data set of its current master clock

As shown on the right-hand figure, the ports can be reconfigured as the quality or connectivity of a clock changes, e.g. the connection between clock 3 and clock 1 is lost. Namely in that situation, boundary clock 1 detects that the synchronization flow 15 and Announce messages from clock 3 are no more received. At the expiration of an internal timer of boundary lock 1, port 11 is reconfigured in a faulty state and port 12 becomes the slave port since clock 4 is the new best clock, i.e. the best remaining clock. Accordingly, the data set of boundary clock 1 is modified to reflect the change in master clock, i.e. the change in the parent data set.

Assuming now that one or more further BCs, not shown, are arranged between boundary clock 1 and slave clock 2, the change in dataset that occurred in clock 1 will propagate down the hierarchy of BCs as each successive BC updates its data set accordingly. This may trigger additional port reconfigurations, e.g. if alternate sources of synchronization are available to some BCs. However, due to cumulated internal timers within each BC, this propagation may take a long time to reach slave clock 2.

### Summary

In an embodiment, the invention provides a synchronization transport network for distributing a time reference between external clocks, comprising:
a first input node having a slave port adapted to be connected to a first external master clock for receiving a first primary synchronization flow and a first clock status information flow from the first external master clock, the first primary synchronization flow comprising a first sequence of primary timestamps, the first clock status information flow comprising a first sequence of clock status reports,
a second input node having a slave port adapted to be connected to a second external master clock for receiving a second primary synchronization flow and a second clock status information flow from the second external master clock, the second primary synchronization flow comprising a second sequence of primary timestamps, the second clock status information flow comprising a second sequence of clock status reports,
an output node having a master port adapted to be connected to an external slave clock for sending a secondary synchronization flow to the external slave clock, the secondary synchronization flow comprising a sequence of secondary timestamps,
wherein the first input node is adapted to record a time-of-arrival of a primary timestamp of the first primary synchronization flow using a local clock and to forward the primary timestamp and the corresponding time-of-arrival to the output node, wherein the first input node is adapted to forward a clock status report of the first clock status information flow to the output node,
wherein the second input node is adapted to record a time-of arrival of a primary timestamp of the second primary synchronization flow using the local clock and to forward the primary timestamp and the corresponding time-of-arrival to the output node, wherein the second input node is adapted to forward a clock status report of the second clock status information flow to the output node,
wherein the output node is adapted to process the clock status reports from the first and second external master clocks so as to select one of external master clocks as a reference external clock, to record a local time-of-arrival of the primary timestamp forwarded by the input node associated to the selected reference external clock using a local clock of the output node, and to generate a secondary timestamp of the secondary synchronization flow as a function of the primary timestamp received from the selected reference external clock and the times-of arrival of the primary timestamp recorded by the output node and the input node associated to the selected reference external clock,
wherein the input nodes and output node of the synchronization transport network implement an internal clock synchronization process to synchronize the respective local clocks to an internal reference time of the synchronization transport network.

According to embodiments, such a synchronization transport network can comprise one or more of the features below.

In embodiments, the synchronization transport network further comprises a first transport tunnel configured between the first input node and the output node to transport the primary timestamps of the first primary synchronization flow and the clock status reports of the first clock status information flow, and a second transport tunnel configured between the second input node and the output node to transport the primary timestamps of the second primary synchronization flow and the clock status reports of the second clock status information flow.

In embodiments, the output node is adapted to compute a time of residence of the primary timestamp received from the selected reference external clock as a function of the times-of-arrival respectively recorded by the transport tunnel-wise associated input node and the output node.

In embodiments, the slave ports of the input nodes, and respectively the master port of the output node are adapted to communicate with the associated master, respectively slave, external clocks using a packet-switching protocol.

In embodiments, the primary and secondary synchronization flows are generated in accordance with an IEEE Precision Time Protocol.

In embodiments, the clock status information flows are generated in accordance with an IEEE Precision Time Protocol, a clock status report comprising an Announce message of the IEEE Precision Time Protocol.

In embodiments, the input nodes and output node implement an internal clock synchronization process to synchronize the respective local clocks to a common reference, i.e. a network internal reference time of the synchronization transport network. The process of synchronizing local clocks to the internal reference time may be based on any known technique, e.g. Synchronous Ethernet, IETF Network Time Protocol and/or IEEE Precision time Protocol with optional support by Synchronous Ethernet. The internal network time of the transport network is independent from the primary synchronization flows that are received from external master clocks and from the secondary synchronization flows that are sent to external slave clocks. The primary and secondary synchronization flows may typically relate to a service time of an external client.

In embodiments, an input node is adapted to detect a loss of the primary synchronization flow from the associated external master clock and to send a clock status report indicating the loss of the primary synchronization flow to the output node, for enabling the output node to select another external master clock as the reference external clock.

In embodiments, an input node further comprises a second slave port adapted to be connected to a third external master clock for receiving a third primary synchronization flow and a third clock status information flow from the third external master clock, the third primary synchronization flow comprising a third sequence of primary timestamps, the third clock status information flow comprising a third sequence of clock status reports,
wherein the output node further comprises a second master port adapted to be connected to a second external slave clock for sending a second secondary synchronization flow to the second external secondary clock, the second secondary synchronization flow comprising a sequence of secondary timestamps,
wherein the input node is adapted to generate context information as a function of the slave port through which a clock status report or primary timestamp is received by the input node and to forward the clock status report or primary timestamp to the output node together with the corresponding context information,
wherein the output node is adapted to process the clock status report or primary timestamp for the purpose of generating a secondary timestamp of the first synchronization flow if the corresponding context information relates to the first slave port or a secondary timestamp of the secondary synchronization flow if the corresponding context information relates to the second slave port.

In an embodiment, the invention provides a method of generating a synchronization flow for a slave clock, comprising: receiving a first primary timestamp and corresponding time-of arrival information from a first input node,
receiving a second primary timestamp and corresponding time-of-arrival information from a second input node,
receiving a first clock status report from the first input node and a second clock status report from the second input node,
selecting a reference synchronization source between primary synchronization flows from respectively the first and second input nodes as a function of a comparison result of the clock status reports from the first and second input nodes,
recording a local time-of-arrival of the primary timestamp received from the selected input node using a local clock,
generating a secondary timestamp as a function of the primary timestamp and corresponding time-of-arrival information received from the selected input node and the recorded local time-of-arrival, and
sending the secondary timestamp to an external slave clock.

In an embodiment, the method further comprises sending a clock status report relating to a source of the external synchronization flow to the external slave clock.

The invention also provides a computer program product comprising computer-executable instructions for performing the above method, e.g. within an output node of the synchronization transport network.

Aspects of the invention are based on the idea of distributing synchronization flows between remote clocks that may be separated by a large number of network hops.

Aspects of the invention stem for the observation that large chains of boundary clocks may be a suboptimal solution for distributing synchronization flows between remote clocks due to undesirable cumulative effects in terms of noise and/or reconfiguration delays.

### Brief description of the drawings

These and other aspects of the invention will be apparent from and elucidated with reference to the embodiments described hereinafter, by way of example, with reference to the drawings.
Figure 1 is a functional representation of a packet-switched network comprising a conventional boundary clock arranged between master clocks and a slave clock.
Figure 2 represents a schematic block diagram and associated data flow diagram showing a synchronization transport network in accordance with an embodiment.
Figure 3 is a functional representation of a synchronization transport network arranged between external master clocks and external slave clocks.

### Detailed description of the embodiments

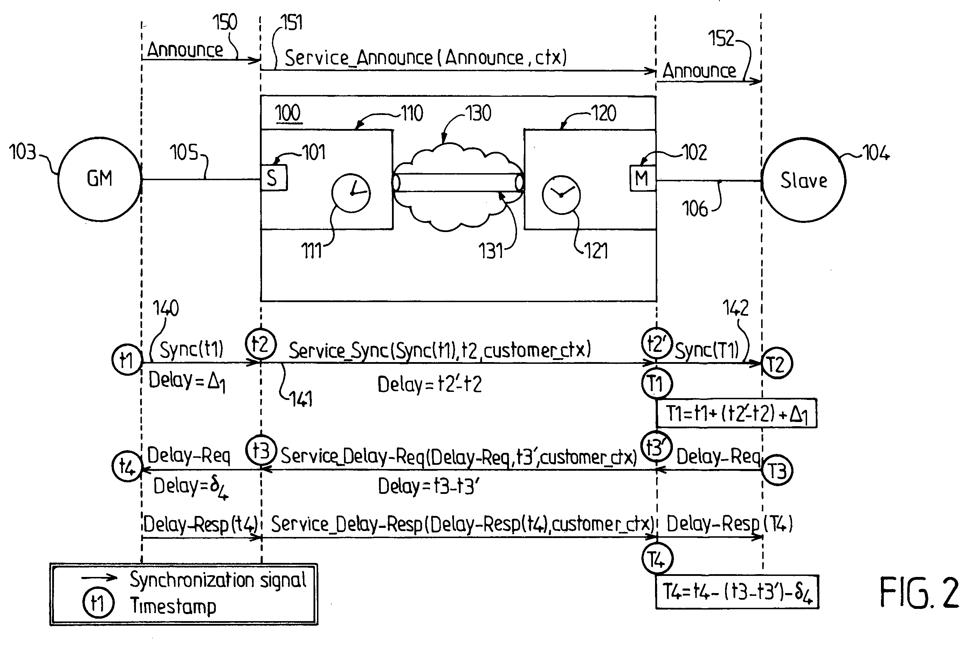

With reference to Figure 2, the synchronization transport network 100 comprises a plurality of network nodes including illustrated nodes 110 and 120 at the network boundary. The synchronization transport network 100 comprises at least one input node 110 comprising a slave port 101 and at least one output node 120 comprising a master port 102. As will be appreciated, the synchronization transport network 100 can include several other input nodes having a slave port or output nodes having a master port. The terms "input" and "output" as used herein refer to a synchronization hierarchy and are not intended to limit data transport functionality of the network nodes.

The slave port 101 of node 110 is connected, via link 105 to an external master clock 103. The external master clock 103 may be a Grandmaster clock or any clock having a higher grade than external clock 104.

Within the clock hierarchy, the synchronization transport network 100 receives PTP messages from its peer master clocks, e.g. external master clock 103 and sends other PTP messages, i.e. these messages are new messages with regards to incoming PTP messages to its peer slave clocks, e.g. external slave clock 104. Within this context, the input node 110 is the destination node of incoming packets (e.g. IP packets) or incoming frames (e.g. Ethernet frames). Thus, no "layer violation" is incurred.

With reference to Figure 2, the operation of the synchronization transport network 100 will now be described. It is assumed in the following steps that the unidirectional delays Δ1 and δ4 are known. There exists a variety of known methods for determining these unidirectional delays in cases where they are not known. These include methods related to the physical layer or related to the 1588V2 standard, such as the peer-delay mechanism. Using the latter method, the time offset between the input node 110 and the external master clock 103 is cancelled out within the roundtrip system of equations. The measurement error is therefore only related to the frequency offset of the local clock of input node 110 with regards to the reference frequency of the external master clock 103. This error is negligible if the peer-delay response time, i.e. the time duration between the reception of the peer-delay request and the transmission of the related peer-delay response, is relatively short (i.e. within milliseconds).

Below the block diagram of Figure 2, the time stamps are represented by circles and synchronization signals are represented by arrows. A PTP message Sync(t1) 140 is first generated by the external master clock 103. Sync(t1) message comprises timestamp t1. The timestamp t1 is a representation of the local time of the external master clock 103, and is generated by the external master clock 103. As can be seen in Figure 2, there exists a transmission delay Δ1 associated with the Sync(t1) message propagating through link 105 to arrive at the slave port 101 of input node 110. As mentioned above, the measurement of delay Δ1 can be assumed to have been performed.

Upon arrival of the Sync(t1) message at the slave port 101, input node 110 uses a local clock 111 to produce timestamp t2. Then input node 110 encapsulates the Sync(t1) message into an internal packet Service_Sync 141. The Service_Sync packet contains the Sync(t1) message, as well as timestamp t2 and information related to the customer context of the PTP Sync message.

The internal packet Service_Sync travels from the input node 110, through a transport tunnel 131, e.g. an IPSec tunnel, across a network 130, to arrive at the output node 120 comprising the master port 102. The network 130 may be based on any transport technology and may comprise any number of intermediate switching nodes, not shown.

When the output node 120 receives the internal Service_Sync packet, it uses a local clock 121 to determine the time t2' at which the internal Service_Sync packet arrived at the output node 120 and it calculates the delay given by the equation t2'-t2, where t2 represents the time at which the Sync(t1) message arrived at the input node 110 via link 105. The output node 120 then calculates a new timestamp T1, using t1, t2'-t2 and Δ1.

As shown in Figure 2, this new timestamp T1 will be equal to tl+(t2'-t2)+ Δ1, where t1 represents the local time of the external master clock 103, t2' represents the time at which the internal Service_Sync packet arrived at the output node 120, t2 represents the time at which the Synch(t1) message arrived at the input node 110 via link 105 and Δ1 represents the transmission delay associated with the Sync(t1) message propagating through link 105 to arrive at the slave port 101 from the transmitting port of the external master clock 103. Using this new timestamp T1, the output node 120 produces a new the Sync(T1) message 142 which it then sends, via link 106 to external slave clock 104. External slave clock 104 captures timestamp T2 according to its local clock at the reception of Sync(T1) message.

Accordingly, similarly to a 1588V2 standardized BC, the synchronization transport network 100 uses information it receives from an upstream clock to produce a new Sync signal. The advantage of this is that, in terms of the PTP protocol, the output node 120 of synchronization transport network 100 will be the unique destination node for each Service_Sync message that is used to propagate timing information. Accordingly, it is possible for the output node 120 to de-encapsulate the Sync message without layer violation. Synchronization transport network 100 can also receive other Sync messages from other sources, as shown in Fig. 3.

Dissimilarly to a 1588V2 standardized BC, there is no need for any node of synchronization transport network 100 to use a "time recovery" block or any related filtering algorithms, as the new Sync(T1) message will be based on the external master clock 103 time, propagation delay time Δ1, and resident time t2'-t2. Instead of this novel approach, 1588 standardized BCs receive a plurality of Sync(t1) and locally processes the timestamps included in those messages, together with filtering algorithms, to converge towards the reference time. This process is considerably slower and more complex than the method used in synchronization transport network 100. Moreover, this process gives rise to low frequency wander accumulation along the synchronization chain, degrading the synchronization accuracy.

In an operational mode of synchronization transport network 100, the external slave clock 104 can be set in a two way mode. Accordingly, the external slave clock 104 not only receives timing information as described above, but will also request and receive delay information relating to the propagation delay between itself and the synchronization transport network 100 it is connected to. An example of this is shown in the timing diagram of Figure 2.

When the two-way mode is deployed at the external slave clock 104, the synchronization transport network 100 executes the same steps as above and several additional steps. These operations allow the external slave clock 104 to determine the upstream link delay between itself and synchronization transport network 100.

With reference to Figure 2, the external slave clock 104 generates a delay request message Delay_Req. The external slave 104 then sends the Delay_Req message to the master port 102 of the synchronization transport network 100. Upon receipt of the Delay_Req message at the master port 102, the output node 120 produces time stamp t3' with local clock 121, which thereby becomes an indication of the local time at which the Delay_Req message was received. The output node 120 then encapsulates the Delay_Req message into an internal packet Service_Delay_Req, which it sends to the input node 110 through transport tunnel 131. The Service_Delay_Req packet contains the Delay_Req message, as well as timestamp t3' and the associated customer context.

As is the case for the one-way mode described above, the two-way mode provides for the production of internal data packet Service_Delay_Req. However, the internal signal arranged to transmit information contained in the Service_Delay_Req message, timestamp t3' and the context information from the output node 120, internally through transport tunnel 131 to the input node 110 could be named differently. When the input node 110 receives the internal Service_Delay_Req packet, the local clock 111 serves to calculate the resident time of the Service_Delay_Req message, i.e. the time required for the information contained in the Service_Delay_Req message to be transmitted internally from the master port 102 to the slave port 101. With reference to Figure 2, this is given by the equation t3-t3', where t3' represents the time at which the Delay_Req message arrived at the output node 120 via link 106, and t3 represents the time at which the internal Service_Delay_Req packet arrived at the input node 110. The resident time t3-t3' is memorized locally within the context information. At slave port 101, a new Delay_Req message is created and sent to the external master clock 103.

When the new Delay_Req message is received at the external master clock 103, the external master clock produces a timestamp t4, which is included in a PTP Delay_Resp(t4) message that it sends to the slave port 101 of the synchronization transport network 100. Upon arrival of the Delay_Resp(t4) message at the slave port 101, input node 110 encapsulates the Delay_Resp(t4) message into internal packet Service_Delay_Resp. The Service_Delay_Resp packet contains the Delay_Resp(t4) message and is sent internally to the output node 120.

When the output node 120 receives the internal Service_Delay_Resp packet, it calculates a new timestamp T4, using t4, t3-t3' and δ4, t3-t3'having been previously memorized within the context information. As shown in Figure 2, this new timestamp T4 will be equal to t4 - (t3-t3') - 64, where t4 represents the local time of the external master clock 103, t3' represents the time at which the Delay_Req message arrived at output node 120, t3 represents the time at which the Service_Delay_Req packet arrived at the input node 110 and δ4 represents the transmission delay associated with the Delay_Req message propagating through link 105 to arrive at external master clock 103. Using this new timestamp T4, the output node 120 produces a new the Delay_Resp(T4) message which it then sends, via link 106 to external slave clock 104. External slave clock 104 then uses the sour timestamps T1, T2, T3 and T4 in order to estimate the unidirectional delays induced by link 106.

Preferably, the local clocks 111 and 121 within the synchronization transport network 100 should be synchronized to generate timestamps based on a same reference time, e.g. a network time. This can be accomplished independently of the client synchronization flows transported by synchronization transport network 100 between external clocks 103 and 104.

As can be seen from the data flow diagram above the block diagram of Figure 2, the external master clock 103 emits an Announce message 150 at a regular time interval to confirm or update its clock characteristic information. Upon arrival of the Announce message at the slave port 101, input node 110 encapsulates the Announce message into an internal packet Service_Announce 151. The Service_Announce packet contains the Announce message and information related to the customer context of the original PTP Announce message. The internal packet Service_Announce travels from the input node 110, through the same transport tunnel 131 as the Service_Sync packet across network 130 to arrive at the output node 120 comprising the master port 102.

Upon receiving the Service_Announce message, the output node 120 deencapsulates the Announce message and uses the contained dataset to select a reference master clock amongst active external master clocks for disciplining external slave clock 104 in accordance with a BMCA-like selection algorithm. As a function of the selected external master clock, output node 120 can generate an Announce message 152 towardsthe external slave clock 104. This selection will now be explained in reference to Figure 3.

Turning to figure 3, elements depicted in dash-dotted lines will be ignored in a first stage of description. Elements identical or similar to those of Figure 2 are denoted by the same numeral and will only be described to the extent that they differ from Figure 2.

In Figure 3, the synchronization transport network 100 comprises two input nodes 110 and 210 each connected to a respective external master clock 103 and 203 respectively. The operations of input node 210 are entirely similar to those of input node 110, except that PTP messages 250 and 240 originating from external master clock 203 are now received and processed as described above. Accordingly, output node 120 receives the Service_Sync messages 141 and Service_Announce messages 151 from input node 110 through tunnel 131 and the Service_Sync messages 241 and Service_Announce messages 251 from input node 210 through tunnel 231. As both synchronization flows 141 and 251 could be used to provide a time reference to slave clock 104, output node 120 compares the datasets that it receives from external master clock 103 and 203 respectively to select the best time reference in accordance with the BMCA or an alternate algorithm. Then, the synchronization flow from the selected external master clock serves to generate the secondary Sync messages 142 for disciplining the external slave clock 104.

If the quality of the selected external master clock 103 or 203 suddenly degrades, this situation will be reflected in the next Announce message 150 or 250 sent by that external master clock. Since output node 120 receives the Announce message through input node 110 or 210 without much intermediate processing, output node can receive the updated dataset of the external master clock rapidly and reconfigure the synchronization hierarchy accordingly, i.e. select another reference source for the synchronization of external slave clock 104. Especially, this reconfiguration will not involve a large cumulated delay as in a typical chain of PTP boundary clocks.

The customer context information contained in the Service_Sync and Service_Announce packets is useful when a transport tunnel, e.g. tunnel 131, is shared between different customer timing flows. This situation is illustrated by the elements depicted in dash-dotted lines in Figure 3. Namely, a second external slave clock 304 connected to a second master port of the output node 120 is under the administrative authority of a different entity than the first external slave clock 104, e.g. two different customers of the synchronization transport network 100. The second external slave clock 304 must be synchronized with a third external master clock 303 connected to a second slave port of input node 110. In such situation, the synchronization flows 140 and 340 and the clock status information flows 150 and 350 of the external master clocks 103 and 303 respectively are received by the same input node 110 and forwarded to the same output node 120 through the same tunnel 131. In figure 3, the data flows originating directly or indirectly from external master clock 303 are designated by the same numeral than corresponding data flows originating directly or indirectly from external master clock 103 increased by 200.

The customer context information attached to each synchronization message or each clock status message makes it possible for the output node 120 to identify the customer process to which the message relates, i.e. either distribution of time between the external clocks 103, 203 and 104 of the first customer or distribution of time between the external clocks 303 and 304 of the second customer, and to process the message accordingly. For that purpose, the context information may comprise any type of customer-specific information, e.g. a customer ID, an IP address prefix or others. In this manner, the proposed architecture of the synchronization transport network 100 can cope with an important number of different customers, each having independent time-of-day references to be transported across the domain. The accuracy of such a method depends on the frequency offset between the Transport Network Operator (TNO) and its related customers.

The configuration of tunnels 131 and 231 between the input nodes and the output nodes of the synchronization transport network 100 can be achieved based on the topology of external master clocks and external slave clocks belonging to each customer using any known method, e.g. manual configuration through an administration plane of the network 100, not shown, or automatic discovery and configuration through an automated control plane, e.g. using MPLS-like topology discovery and connection setup methods.

The functions of the input and output nodes of synchronization transport network 100 can be implemented through hardware means like e.g. an ASIC, or a combination of hardware and software means, e.g. an ASIC and an FPGA, or at least one microprocessor and at least one memory with software modules located therein.

The invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. A synchronization transport network (100) for distributing a time reference between external clocks (103, 203, 104), comprising :
a first input node (110) having a slave port adapted to be connected to a first external master clock (103) for receiving a first primary synchronization flow (140) and a first clock status information flow (150) from the first external master clock, the first primary synchronization flow comprising a first sequence of primary timestamps, the first clock status information flow comprising a first sequence of clock status reports,
a second input node (210) having a slave port adapted to be connected to a second external master clock (203) for receiving a second primary synchronization flow (240) and a second clock status information flow (250) from the second external master clock, the second primary synchronization flow comprising a second sequence of primary timestamps, the second clock status information flow comprising a second sequence of clock status reports,
an output node (120) having a master port adapted to be connected to an external slave clock (104) for sending a secondary synchronization flow (142) to the external slave clock, the secondary synchronization flow comprising a sequence of secondary timestamps,
wherein the first input node (110) is adapted to record a time-of-arrival of a primary timestamp of the first primary synchronization flow (140) using a local clock and to forward the primary timestamp and the corresponding time-of-arrival to the output node (120),
wherein the first input node is adapted to forward a clock status report of the first clock status information flow (150) to the output node,
wherein the second input node (210) is adapted to record a time-of-arrival of a primary timestamp of the second primary synchronization flow (240) using the local clock and to forward the primary timestamp and the corresponding time-of-arrival to the output node,
wherein the second input node is adapted to forward a clock status report of the second clock status information flow (250) to the output node,
wherein the output node (120) is adapted to process the clock status reports from the first and second external master clocks so as to select one of external master clocks (103, 203) as a reference external clock, to record a local time-of-arrival of the primary timestamp forwarded by the input node (110, 210) associated to the selected reference external clock using a local clock of the output node, and to generate a secondary timestamp of the secondary synchronization flow as a function of the primary timestamp received from the selected reference external clock and the times-of-arrival of the primary timestamp recorded by the output node (120) and the input node (110, 210) associated to the selected reference external clock,
wherein the input nodes (110, 210) and output node (120) of the synchronization transport network implement an internal clock synchronization process to synchronize the respective local clocks to an internal reference time of the synchronization transport network.

2. A synchronization transport network in accordance with claim 1, further comprising a first transport tunnel (131) configured between the first input node and the output node to transport the primary timestamps of the first primary synchronization flow and the clock status reports of the first clock status information flow, and a second transport tunnel (231) configured between the second input node and the output node to transport the primary timestamps of the second primary synchronization flow and the clock status reports of the second clock status information flow.

3. A synchronization transport network in accordance with claim 2, wherein the output node (120) is adapted to compute a time of residence of the primary timestamp received from the selected reference external clock as a function of the times-of-arrival respectively recorded by the transport tunnel-wise associated input node and the output node.

4. A synchronization transport network in accordance with any one of claims 1 to 3, wherein the slave ports (101) of the input nodes, and respectively the master port (102) of the output node are adapted to communicate with the associated master, respectively slave, external clocks (103, 104) using a packet-switching protocol.

5. A synchronization transport network in accordance with claim 4, wherein the primary synchronization flows (140, 240) and secondary synchronization flow (142) are generated in accordance with an IEEE Precision Time Protocol.

6. A synchronization transport network in accordance with claim 5, wherein the clock status information flows (150, 250) are generated in accordance with an IEEE Precision Time Protocol, a clock status report comprising an Announce message of the IEEE Precision Time Protocol.

7. A synchronization transport network in accordance with any one of claims 1 to 6, wherein the process of synchronizing local clocks to the internal reference time of the synchronization transport network is based on an IEEE Precision Time Protocol.

8. A synchronization transport network in accordance with any one of claims 1 to 7, wherein an input node (110) is adapted to detect a loss of the primary synchronization flow (140) from the associated external master clock (103) and to send a clock status report indicating the loss of the primary synchronization flow to the output node (120), for enabling the output node to select another master clock as the reference external clock.

9. A synchronization transport network in accordance with any one of claims 1 to 8, wherein an input node (110) further comprises a second slave port adapted to be connected to a third external master clock (303) for receiving a third primary synchronization flow (340) and a third clock status information flow (350) from the third external master clock, the third primary synchronization flow comprising a third sequence of primary timestamps, the third clock status information flow comprising a third sequence of clock status reports,
wherein the output node (120) further comprises a second master port adapted to be connected to a second external slave clock (304) for sending a second secondary synchronization flow to the second external slave clock, the second secondary synchronization flow comprising a sequence of secondary timestamps,
wherein the input node (110) is adapted to generate context information as a function of the slave port through which a clock status report (150, 350) or primary timestamp (140, 340) is received by the input node and to forward the clock status report (151, 351) or primary timestamp (141, 341) to the output node together with the corresponding context information,
wherein the output node (120) is adapted to process the clock status report or primary timestamp for the purpose of generating a secondary timestamp of the first synchronization flow (142) if the corresponding context information relates to the first slave port or a secondary timestamp of the secondary synchronization flow (342) if the corresponding context information relates to the second slave port.

10. A method of generating a synchronization flow (142) for a slave clock (104), comprising:
receiving a first primary timestamp and corresponding time-of-arrival information (141) from a first input node (110),
receiving a second primary timestamp and corresponding time-of-arrival information (241) from a second input node (210),
receiving a first clock status report (151) from the first input node (110) and a second clock status report (251) from the second input node (210),
selecting a reference synchronization source between primary synchronization flows from respectively the first and second input nodes (110, 210) as a function of a comparison result of the clock status reports (151, 251) from the first and second input nodes,
recording a local time-of-arrival of the primary timestamp received from the selected input node using a local clock, and
generating a secondary timestamp (142) as a function of the primary timestamp and corresponding time-of-arrival information received from the selected input node and the recorded local time-of-arrival, and
sending the secondary timestamp (142) to an external slave clock (104).

11. A method in accordance with claim 10, further comprising sending a clock status report (152) relating to a source of the external synchronization flow to the external slave clock (104).

12. A computer program product comprising computer-executable instructions for performing the method of claim 10 or 11.

## Patentansprüche

1. Synchronisations-Transportnetzwerk (100) zum Verteilen einer Zeitreferenz zwischen externen Taktgebern (103, 203, 104), umfassend:
Einen ersten Eingangsknoten (110) mit einem Slave-Knoten, welcher dazu ausgelegt ist, an einen ersten externen Master-Taktgeber (103) angeschlossen zu werden, um einen ersten primären Synchronisationsfluss (140) und einen ersten Taktgeberzustandsinformationsfluss (150) von dem ersten externen Master-Taktgeber zu empfangen, wobei der erste primäre Synchronisationsfluss eine erste Folge von primären Zeitstempeln enthält, wobei der erste Taktgeberzustandsinformationsfluss eine erste Folge von Taktgeberzustandsberichten enthält,
einen zweiten Eingangsknoten (210) mit einem Slave-Knoten, welcher dazu ausgelegt ist, an einen zweiten externen Master-Taktgeber (203) angeschlossen zu werden, um einen zweiten primären Synchronisationsfluss (240) und einen zweiten Taktgeberzustandsinformationsfluss (250) von dem zweiten externen Master-Taktgeber zu empfangen, wobei der zweite primäre Synchronisationsfluss eine zweite Folge von primären Zeitstempeln enthält, wobei der zweite Taktgeberzustandsinformationsfluss eine zweite Folge von Taktgeberzustandsberichten enthält,
einen Ausgangsknoten (120) mit einem Master-Port, welcher dazu ausgelegt ist, an einen externen Slave-Taktgeber (104) angeschlossen zu werden, um einen sekundären Synchronisationsfluss (142) an den externen Slave-Taktgeber zu senden, wobei der sekundäre Synchronisationsfluss eine Folge von sekundären Zeitstempeln enthält,
wobei der erste Eingangsknoten (110) dazu ausgelegt ist, eine Ankunftszeit eines primären Zeitstempels des ersten primären Synchronisationsflusses (140) unter Verwendung eines lokalen Taktgebers zu erfassen und den primären Zeitstempel sowie die entsprechende Ankunftszeit an den Ausgangsknoten (120) weiterzuleiten,
wobei der erste Eingangsknoten dazu ausgelegt ist, einen Taktgeberzustandsbericht des ersten Taktgeberzustandsinformationsflusses (150) an den Ausgangsknoten weiterzuleiten,
wobei der zweite Eingangsknoten (210) dazu ausgelegt ist, eine Ankunftszeit eines primären Zeitstempels des zweiten primären Synchronisationsflusses (240) unter Verwendung eines lokalen Taktgebers zu erfassen und den primären Zeitstempel sowie die entsprechende Ankunftszeit an den Ausgangsknoten weiterzuleiten,
wobei der zweite Eingangsknoten dazu ausgelegt ist, einen Taktgeberzustandsbericht des zweiten Taktgeberzustandsinformationsflusses (250) an den Ausgangsknoten weiterzuleiten,
wobei der Ausgangsknoten (120) dazu ausgelegt ist, die Taktgeberzustandsberichte von dem ersten und dem zweiten externen Master-Taktgeber zu verarbeiten, um einen der externen Master-Taktgeber (103, 203) als einen externen Referenztaktgeber auszuwählen, eine lokale Ankunftszeit des primären Zeitstempels, welcher von dem mit dem ausgewählten externen Referenztaktgeber assoziierten Eingangsknoten (110, 210) weitergeleitet wurde, unter Verwendung eines lokalen Taktgebers des Ausgangsknotens zu erfassen und einen sekundären Zeitstempel des sekundären Synchronisationsflusses in Abhängigkeit von dem von dem ausgewählten externen Referenztaktgeber empfangenen primären Zeitstempel und den von dem Ausgangsknoten (120) und den mit dem ausgewählten externen Referenztaktgeber assoziierten Eingangsknoten (110, 210) erfassten Ankunftszeiten des primären Zeitstempels zu erzeugen,
wobei die Eingangsknoten (110, 210) und der Ausgangsknoten (120) des Synchronisations-Transportnetzwerks einen internen Taktgebersynchronisationsprozess implementieren, um die jeweiligen lokalen Taktgeber mit einer internen Referenzzeit des Synchronisations-Transportnetzwerks zu synchronisieren.

2. Synchronisations-Transportnetzwerk nach Anspruch 1, weiterhin umfassend einen ersten Transporttunnel (131), welcher zwischen dem ersten Eingangsknoten und dem Ausgangsknoten für den Transport der primären Zeitstempel des ersten primären Synchronisationsflusses und der Taktgeberzustandsberichte des ersten Taktgeberzustandsinformationsflusses konfiguriert ist, und einen zweiten Transporttunnel (231), welcher zwischen dem zweiten Eingangsknoten und dem Ausgangsknoten für den Transport der primären Zeitstempel des zweiten primären Synchronisationsflusses und der Taktgeberzustandsberichte des zweiten Taktgeberzustandsinformationsflusses konfiguriert ist.

3. Synchronisations-Transportnetzwerk nach Anspruch 2, wobei der Ausgangsknoten (120) für das Berechnen einer Aufenthaltszeit des von dem ausgewählten externen Referenztaktgebers empfangenen primären Zeitstempels in Abhängigkeit von den jeweils von dem transporttunnelartig assoziierten Eingangsknoten und dem Ausgangsknoten erfassten Ankunftszeiten ausgelegt ist

4. Synchronisations-Transportnetzwerk nach einem beliebigen der Ansprüche 1 bis 3, wobei die Slave-Ports (101) der Eingangsknoten beziehungsweise der Master-Port (102) des Ausgangsknotens für das Kommunizieren mit den assoziierten externen Master- beziehungsweise Slave-Taktgebern (103, 104) unter Verwendung eines Paketvermittlungsprotokolls ausgelegt sind.

5. Synchronisations-Transportnetzwerk nach Anspruch 4, wobei die primären Synchronisationsflüsse (140, 240) und der sekundäre Synchronisationsfluss (142) in Übereinstimmung mit einem Precision-Time-Protokoll gemäß dem IEEE-Standard erzeugt werden.

6. Synchronisations-Transportnetzwerk nach Anspruch 5, wobei die Taktgeberzustandsinformationsflüsse (150, 250) in Übereinstimmung mit einem Precision-Time-Protokoll gemäß dem IEEE-Standard erzeugt werden, wobei ein Taktgeberzustandsbericht eine Announce-Nachricht des Precision-Time-Protokolls gemäß dem IEEE-Standard enthält.

7. Synchronisations-Transportnetzwerk nach einem beliebigen der Ansprüche 1 bis 6, wobei der Vorgang des Synchronisierens der lokalen Taktgeber mit der internen Referenzzeit des Synchronisations-Transportnetzwerks auf einem Precision-Time-Protokoll gemäß dem IEEE-Standard basiert.

8. Synchronisations-Transportnetzwerk nach einem beliebigen der Ansprüche 1 bis 7, wobei ein Eingangsknoten (110) dazu ausgelegt ist, einen Verlust des primären Synchronisationsflusses (140) von dem assoziierten externen Master-Taktgeber (103) zu erkennen und einen Taktgeberzustandsbericht, welcher den Verlust des primären Synchronisationsflusses angibt, an den Ausgangsknoten (120) zu senden, um es dem Ausgangsknoten zu ermöglichen, einen anderen Master-Taktgeber als den externen Referenztaktgeber auszuwählen.

9. Synchronisations-Transportnetzwerk nach einem beliebigen der Ansprüche 1 bis 8, wobei in Eingangsknoten (110) weiterhin einen zweiten Slave-Knoten umfasst, welcher dazu ausgelegt ist, an einen dritten externen Master-Taktgeber (303) angeschlossen zu werden, um einen dritten primären Synchronisationsfluss (340) und einen dritten Taktgeberzustandsinformationsfluss (350) von dem dritten externen Master-Taktgeber zu empfangen, wobei der dritte primäre Synchronisationsfluss eine dritte Folge von primären Zeitstempeln enthält, wobei der dritte Taktgeberzustandsinformationsfluss eine dritte Folge von Taktgeberzustandsberichten enthält,
wobei der Ausgangsknoten (120) weiterhin einen zweiten Master-Port umfasst, welcher dazu ausgelegt ist, an einen zweiten externen Slave-Taktgeber (304) angeschlossen zu werden, um einen zweiten sekundären Synchronisationsfluss an den zweiten externen Slave-Taktgeber zu senden, wobei der zweite sekundäre Synchronisationsfluss eine Folge von sekundären Zeitstempeln enthält,
wobei der Eingangsknoten (110) dazu ausgelegt ist, eine Kontextinformation in Abhängigkeit von dem Slave-Port, über welchen ein Taktgeberzustandsbericht (150, 350) oder ein primärer Zeitstempel (140, 340) am Eingangsknoten empfangen wird, zu erzeugen und den Taktgeberzustandsbericht (151, 351) oder den primären Zeitstempel (141, 341) zusammen mit den entsprechenden Kontextinformationen an den Ausgangsknoten weiterzuleiten,
wobei der Ausgangsknoten (120) dazu ausgelegt ist, den Taktgeberzustandsbericht oder den primären Zeitstempel zu verarbeiten, um einen sekundären Zeitstempel des ersten Synchronisationsflusses (142), wenn sich die entsprechenden Kontextinformationen auf den ersten Slave-Port beziehen, oder einen sekundären Zeitstempel des zweiten Synchronisationsflusses (342), wenn sich die entsprechenden Kontextinformationen auf den zweiten Slave-Port beziehen, zu erzeugen.

10. Verfahren zum Erzeugen eines Synchronisationsflusses (142) für einen Slave-Taktgeber (104), umfassend:
Empfangen eines ersten primären Zeitstempels und der entsprechenden Ankunftszeitinformationen (141) von einem ersten Eingangsknoten (110),
Empfangen eines zweiten primären Zeitstempels und der entsprechenden Ankunftszeitinformationen (241) von einem zweiten Eingangsknoten (210),
Empfangen eines ersten Taktgeberzustandsberichts (151) von dem ersten Eingangsknoten (110) und eines zweiten Taktgeberzustandsberichts (251) von dem zweiten Eingangsknoten (210),
Auswählen einer Synchronisationsreferenzquelle zwischen primären Synchronisationsflüssen von jeweils dem ersten und dem zweiten Eingangsknoten (110, 210) in Abhängigkeit von einem Vergleichsergebnis der Taktgeberzustandsberichte (151, 251) von dem ersten und dem zweiten Eingangsknoten,
Erfassen einer lokalen Ankunftszeit des von dem ausgewählten Eingangsknoten empfangenen primären Zeitstempels unter Verwendung eines lokalen Taktgebers, und
Erzeugen eines sekundären Zeitstempels (142) in Abhängigkeit von dem primären Zeitstempel und den entsprechenden Ankunftszeitinformationen, welche von dem ausgewählten Eingangsknoten empfangen wurden, und von der erfassten Ankunftszeit, und
Senden des sekundären Zeitstempels (142) an einen externen Slave-Taktgeber (104).

11. Verfahren nach Anspruch 10, weiterhin umfassend das Senden eines sich auf eine Quelle des externen Synchronisationsflusses beziehenden Taktgeberzustandsberichts (152) an den externen Slave-Taktgeber (104).

12. Computerprogramm-Produkt mit computerausführbaren Befehlen zum Durchführen des Verfahrens gemäß Anspruch 10 oder 11.

## Revendications

1. Réseau de transport de synchronisation (100) pour distribuer une référence temporelle entre des horloges externes (103, 203, 104), comprenant :
un premier noeud d'entrée (110) présentant un port esclave adapté pour être connecté à une première horloge maîtresse externe (103) pour recevoir un premier flux de synchronisation primaire (140) et un premier flux d'informations d'état d'horloge (150) à partir de la première horloge maîtresse externe, le premier flux de synchronisation primaire comprenant une première séquence d'estampilles temporelles primaires, le premier flux d'informations d'état d'horloge comprenant une première séquence de rapports d'état d'horloge,
un deuxième noeud d'entrée (210) présentant un port esclave adapté pour être connecté à une deuxième horloge maîtresse externe (203) pour recevoir un deuxième flux de synchronisation primaire (240) et un deuxième flux d'informations d'état d'horloge (250) à partir de la deuxième horloge maîtresse externe, le deuxième flux de synchronisation primaire comprenant une deuxième séquence d'estampilles temporelles primaires, le deuxième flux d'informations d'état d'horloge comprenant une deuxième séquence de rapports d'état d'horloge,
un noeud de sortie (120) présentant un port maître adapté pour être connecté à une horloge esclave externe (104) pour envoyer un flux de synchronisation secondaire (142) à l'horloge esclave externe, le flux de synchronisation secondaire comprenant une séquence d'estampilles temporelles secondaires,
dans lequel le premier noeud d'entrée (110) est adapté pour enregistrer un temps d'arrivée d'une estampille temporelle primaire du premier flux de synchronisation primaire (140) en utilisant une horloge locale et pour transférer l'estampille temporelle primaire et le temps d'arrivée correspondant vers le noeud de sortie (120), le premier noeud d'entrée étant adapté pour transférer un rapport d'état d'horloge du premier flux d'informations d'état d'horloge (150) vers le noeud de sortie,
dans lequel le deuxième noeud d'entrée (210) est adapté pour enregistrer un temps d'arrivée d'une estampille temporelle primaire du deuxième flux de synchronisation primaire (240) en utilisant l'horloge locale et pour transférer l'estampille temporelle primaire et le temps d'arrivée correspondant vers le noeud de sortie, le deuxième noeud d'entrée étant adapté pour transférer un rapport d'état d'horloge du deuxième flux d'informations d'état d'horloge (250) vers le noeud de sortie,
dans lequel le noeud de sortie (120) est adapté pour traiter les rapports d'état d'horloge à partir des première et deuxième horloges maîtresses externes de sorte à sélectionner une des horloges maîtresses externes (103, 203) comme horloge externe de référence, pour enregistrer un temps d'arrivée local de l'estampille temporelle primaire transférée par le noeud d'entrée (110, 210) associé à l'horloge externe de référence sélectionnée en utilisant une horloge locale du noeud de sortie, et pour générer une estampille temporelle secondaire du flux de synchronisation secondaire en fonction de l'estampille temporelle primaire provenant de l'horloge externe de référence sélectionnée et des temps d'arrivée de l'estampille temporelle primaire enregistrés par le noeud de sortie (120) et le noeud d'entrée (110, 210) associé à l'horloge externe de référence sélectionnée,
dans lequel les noeuds d'entrée (110, 210) et le noeud de sortie (120) du réseau de transport de synchronisation mettent en oeuvre un processus de synchronisation d'horloge interne pour synchroniser les horloges locales respectives avec un temps de référence interne du réseau de transport de synchronisation.

2. Réseau de transport de synchronisation selon la revendication 1, comprenant en outre un premier tunnel de transport (131) configuré entre le premier noeud d'entrée et le noeud de sortie pour transporter les estampilles temporelles primaires du premier flux de synchronisation primaire et les rapports d'état d'horloge du premier flux d'informations d'état d'horloge, et un deuxième tunnel de transport (231) configuré entre le deuxième noeud d'entrée et le noeud de sortie pour transporter les estampilles temporelles primaires du deuxième flux de synchronisation primaire et les rapports d'état d'horloge du deuxième flux d'informations d'état d'horloge.

3. Réseau de transport de synchronisation selon la revendication 2, dans lequel le noeud de sortie (120) est adapté pour calculer un temps de séjour de l'estampille temporelle primaire provenant de l'horloge externe de référence sélectionnée en fonction des temps d'arrivée respectivement enregistrés par le noeud d'entrée associé au tunnel de transport et le noeud de sortie.

4. Réseau de transport de synchronisation selon l'une quelconque des revendications 1 à 3, dans lequel les ports esclaves (101) des noeuds d'entrée, et respectivement le port maître (102) du noeud de sortie, sont adaptés pour communiquer avec les horloges externes, respectivement esclaves, maîtresses associées (103, 104) en utilisant un protocole de commutation de paquets.

5. Réseau de transport de synchronisation selon la revendication 4, dans lequel les flux de synchronisation primaires (140, 240) et le flux de synchronisation secondaire (142) sont générés conformément à un protocole de temps de précision IEEE.

6. Réseau de transport de synchronisation selon la revendication 5, dans lequel les flux d'informations d'état d'horloge (150, 250) sont générés conformément à un protocole de temps de précision IEEE, un rapport d'état d'horloge comprenant un message d'annonce du protocole de temps de précision IEEE.

7. Réseau de transport de synchronisation selon l'une quelconque des revendications 1 à 6, dans lequel le processus de synchronisation d'horloges locales avec le temps de référence interne du réseau de transport de synchronisation est basé sur un protocole de temps de précision IEEE.

8. Réseau de transport de synchronisation selon l'une quelconque des revendications 1 à 7, dans lequel un noeud d'entrée (110) est adapté pour détecter une perte du flux de synchronisation primaire (140) à partir de l'horloge maîtresse externe associée (103) et pour envoyer un rapport d'état d'horloge indiquant la perte du flux de synchronisation primaire au noeud de sortie (120), pour permettre au noeud de sortie de sélectionner une autre horloge maîtresse comme horloge externe de référence.

9. Réseau de transport de synchronisation selon l'une quelconque des revendications 1 à 8, dans lequel un noeud d'entrée (110) comprend en outre un deuxième port esclave adapté pour être connecté à une troisième horloge maîtresse externe (303) pour recevoir un troisième flux de synchronisation primaire (340) et un troisième flux d'informations d'état d'horloge (350) à partir de la troisième horloge externe, le troisième flux de synchronisation primaire comprenant une troisième séquence d'estampilles temporelles primaires, le troisième flux d'informations d'état d'horloge comprenant une troisième séquence de rapports d'état d'horloge,
dans lequel le noeud de sortie (120) comprend en outre un deuxième port maître adapté pour être connecté à une deuxième horloge esclave externe (304) pour envoyer un deuxième flux de synchronisation secondaire à la deuxième horloge esclave externe, le deuxième flux de synchronisation secondaire comprenant une séquence d'estampilles temporelles secondaires,
dans lequel le noeud d'entrée (110) est adapté pour générer des informations contextuelles en fonction du port esclave à travers lequel un rapport d'état d'horloge (150, 350) ou une estampille temporelle primaire (140, 340) est reçu par le noeud d'entrée et pour transférer le rapport d'état d'horloge (151, 351) ou l'estampille temporelle primaire (141, 341) vers le noeud de sortie avec les informations contextuelles correspondantes,
dans lequel le noeud de sortie (120) est adapté pour traiter le rapport d'état d'horloge ou l'estampille temporelle primaire dans le but de générer une estampille temporelle secondaire du premier flux de synchronisation (142) si les informations contextuelles correspondantes se rapportent au premier port esclave ou une estampille temporelle secondaire du flux de synchronisation secondaire (342) si les informations contextuelles correspondantes se rapportent au deuxième port esclave.

10. Procédé de génération d'un flux de synchronisation (142) pour une horloge esclave (104), comprenant les étapes suivantes :
recevoir une première estampille temporelle primaire et des informations de temps d'arrivée correspondantes (141) à partir d'un premier noeud d'entrée (110),
recevoir une deuxième estampille temporelle primaire et des informations de temps d'arrivée correspondantes (241) à partir d'un deuxième noeud d'entrée (210),
recevoir un premier rapport d'état d'horloge (151) à partir du premier noeud d'entrée (110) et un deuxième rapport d'état d'horloge (251) à partir du deuxième noeud d'entrée (210),
sélectionner une source de synchronisation de référence entre des flux de synchronisation primaires respectivement à partir du premier et du deuxième noeuds d'entrée (110, 210) en fonction d'un résultat de comparaison des rapports d'état d'horloge (151, 251) à partir des premier et deuxième noeuds d'entrée,
enregistrer un temps d'arrivée local de l'estampille temporelle primaire provenant du noeud d'entrée sélectionné en utilisant une horloge locale, et
générer une estampille temporelle secondaire (142) en fonction de l'estampille temporelle primaire et d'informations de temps d'arrivée correspondantes provenant du noeud d'entrée sélectionné et du temps d'arrivée local enregistré, et
envoyer l'estampille temporelle secondaire (142) à une horloge esclave externe (104).

11. Procédé selon la revendication 10, comprenant en outre l'envoi d'un rapport d'état d'horloge (152) relatif à une source du flux de synchronisation externe à l'horloge esclave externe (104).

12. Produit de programme informatique comprenant des instructions exécutables par ordinateur permettant d'exécuter le procédé selon la revendication 10 ou 11.
